# EUROPEAN PATENT APPLICATION

(11) **EP 4 528 990 A1**
(43) Date of publication of application: **26.03.2025**
(21) Application number: 24186864.5
(22) Date of filing: 05.07.2024
(51) Int. Cl.: H02K 1/278, H02K 15/03

(54) **ROTOR MANUFACTURING APPARATUS AND ROTOR MANUFACTURING METHOD**

(30) Priority: 20.09.2023 JP 2023154015
(71) Applicant: Kabushiki Kaisha Toshiba, Minato-ku Tokyo 105-0023 (JP)
(72) Inventor: Hagiwara, Masaya, Tokyo 105-0023 (JP); Ueno, Hirofumi, Tokyo 105-0023 (JP); Kumata, Takashi, Tokyo 105-0023 (JP); Kokubo, Takahiro, Tokyo 105-0023 (JP)
(74) Representative: Hoffmann Eitle

(57) **Abstract**

A rotor manufacturing apparatus of an embodiment includes a rotor core support unit and a magnet support mechanism. The magnet support mechanism includes a pair of support members and a driving unit. The pair of support members face each other in a facing direction orthogonal to both a radial direction and an axial direction. A magnet is disposed between the pair of support members. The driving unit moves the pair of support members close to each other and away from each other in the facing direction. Each of the pair of support members includes a support surface. The pair of support surfaces face each other in the facing direction. The pair of support surfaces contact circumferential end surfaces of the magnet. The pair of support surfaces are respectively inclined away from each other in the facing direction outwardly in the radial direction.

## Description

### BACKGROUND

### Field

Embodiments described herein relate generally to a rotor manufacturing apparatus and a rotor manufacturing method.

### Related Art

A surface permanent magnetic (SPM) rotor having a magnet attached to an outer periphery of a rotor core is known. In a large rotor, since the magnetic force of the magnet becomes large, it is difficult to dispose the magnet on the outer peripheral surface of the rotor core while controlling the attractive force or repulsive force of the magnet.

### [Patent Documents]

[Patent Document 1] Japanese Unexamined Patent Application, First Publication No. 2021-10271

### BRIEF DESCRIPTION OF THE DRAWINGS

FIG. 1 is a schematic cross-sectional view of a rotor manufacturing apparatus according to an embodiment.
FIG. 2 is a perspective view of a magnet support mechanism of the rotor manufacturing apparatus according to the embodiment.
FIG. 3 is a schematic view showing a magnet attachment step of a rotor manufacturing method according to the embodiment.
FIG. 4 is a schematic view showing the magnet attachment step of the rotor manufacturing method according to the embodiment.
FIG. 5 is a cross-sectional view taken along a center axis of a rotating electric machine including a rotor manufactured by the manufacturing method according to the embodiment.
FIG. 6 is a cross-sectional view orthogonal to the center axis of the rotating electric machine including the rotor manufactured by the manufacturing method according to the embodiment.
FIG. 7 is a perspective view of a magnet in the rotor manufacturing method according to the embodiment.
FIG. 8 is a schematic view showing a configuration example of an aircraft.

### DETAILED DESCRIPTION OF THE INVENTION

Hereinafter, a rotor manufacturing apparatus and a rotor manufacturing method of an embodiment will be described with reference to the drawings.

In some embodiments, a rotor manufacturing apparatus is configured to attach a magnet to an outer peripheral surface of a rotor core extending in an axial direction about a center axis. The rotor manufacturing apparatus includes a rotor core support unit which supports the rotor core; and a magnet support mechanism which supports the magnet on the outside of the rotor core in a radial direction. The magnet support mechanism includes a pair of support members and a driving unit. The pair of support members face each other in a facing direction orthogonal to both the radial direction and the axial direction. The pair of support members is configured to let the magnet disposed between the pair of support members. The driving unit is configured to move the pair of support members close to each other and away from each other in the facing direction. The pair of support members has a pair of support surfaces, respectively, which face each other in the facing direction. The pair of support surfaces is configured to contact with circumferential end surfaces of the magnet. The pair of support surfaces are respectively inclined away from each other in the facing direction outwardly in the radial direction.

A rotor manufacturing method of an embodiment is a rotor manufacturing method of attaching a magnet to an outer peripheral surface of a rotor core extending in an axial direction about a center axis. A direction orthogonal to both radial and axial directions of the center axis is defined as a facing direction. The rotor manufacturing method is performed using a magnet support mechanism. The magnet support mechanism includes a pair of support surfaces. The pair of support surfaces are respectively inclined in a direction moving away from each other in the facing direction as they go outward in the radial direction. In the rotor manufacturing method, circumferential end surfaces of the magnet are respectively brought into contact with the pair of support surfaces to support the magnet. Further, in the rotor manufacturing method, the pair of support surfaces are moved away from each other in the facing direction FD to move the magnet inward in the radial direction to be attached to the outer peripheral surface of the rotor core.

The design of the rotor manufacturing apparatus, the rotor manufactured by the rotor manufacturing apparatus, and the rotating electric machine including the rotor can be changed as appropriate to suit the specifications and the like. The shape and the like of each member included in the rotor manufacturing apparatus, the rotor manufactured by the rotor manufacturing apparatus, and the rotating electric machine can be changed arbitrarily and the shape, number, and the like in the drawing are merely examples. Similarly, the rotor manufacturing method can be changed as appropriate for each step. The configuration of each step included in the rotor manufacturing apparatus can be changed arbitrarily, and the state shown in the drawings is an example.

In the following description, the direction parallel to a center axis J is simply referred to as the "axial direction", the radial direction centered on the center axis J is simply referred to as the "radial direction", and the circumferential direction centered on the center axis J is simply referred to as the "circumferential direction θ". Additionally, in each figure, the axial direction AD, the radial direction RD, and the circumferential direction θ are illustrated as necessary. In each figure, the direction in which the arrow of the axial direction AD points is referred to as "one axial side (+AD)" and the opposite direction is referred to as the "other axial side (-AD)."

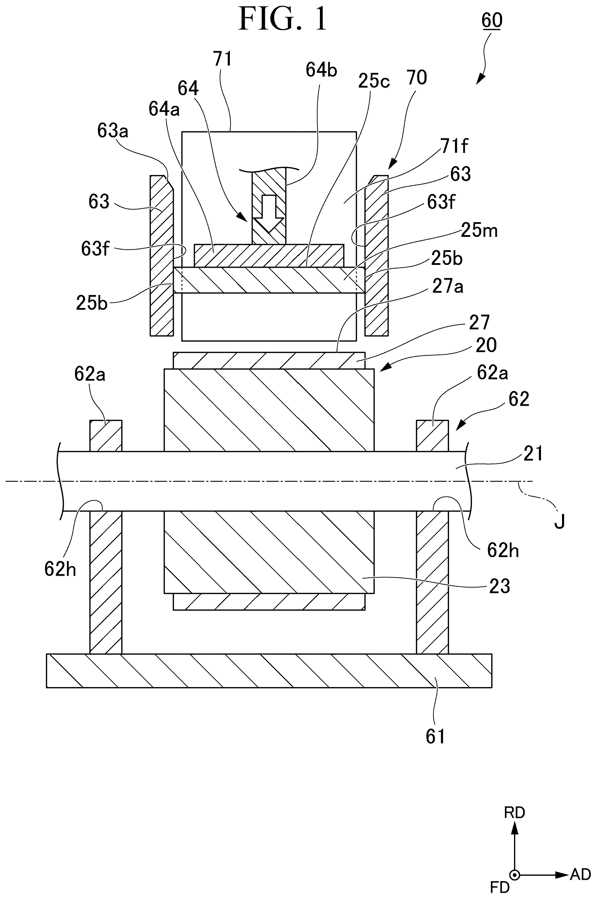

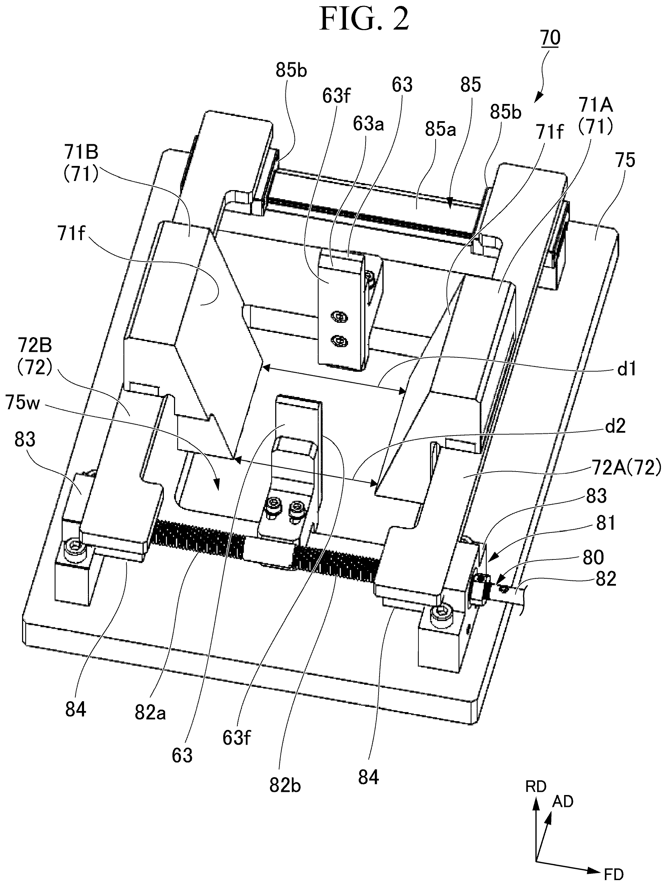

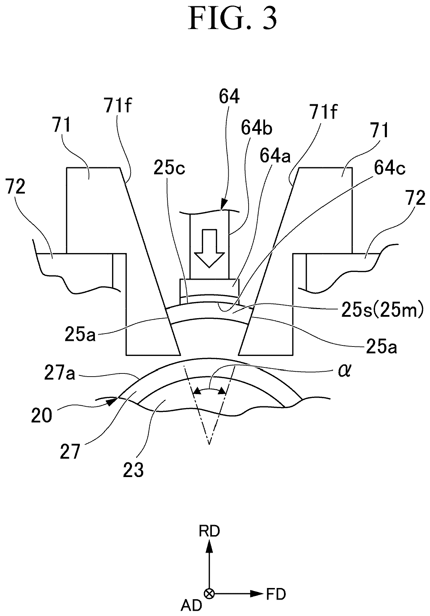

Next, a method of manufacturing a rotor 20 and a rotor manufacturing apparatus 60 of this embodiment will be described. FIG. 1 is a schematic cross-sectional view of the rotor manufacturing apparatus 60 of this embodiment. FIG. 2 is a perspective view of a magnet support mechanism 70 of the rotor manufacturing apparatus 60. FIG. 3 is a schematic view when the rotor manufacturing apparatus 60 is viewed from the axial direction.

As shown in FIG. 1, the rotor manufacturing apparatus 60 of this embodiment includes, for example, a base portion 61, a rotor core support unit 62, a magnet support mechanism 70, a pressure mechanism 64, and a pair of contact plates 63. The rotor manufacturing apparatus 60 is an assembly device that attaches a magnet 25m to an outer peripheral surface 27a of a rotor core 27 to which a shaft 21 and a hub member 23 are assembled.

The base portion 61 is installed on a floor or a pedestal of a factory where the rotor 20 is manufactured. The base portion 61 is, for example, a plate member that is disposed along a floor. Each portion of the rotor manufacturing apparatus 60 is fixed to the base portion 61.

The rotor core support unit 62 supports the rotor core 27. The rotor core support unit 62 includes, for example, a pair of support columns 62a which are fixed to the base portion 61. The pair of support columns 62a extend upward from the base portion 61. The pair of support columns 62a are arranged on both sides of the rotor core 27 in the axial direction AD. The pair of support columns 62a are respectively provided with holding holes 62h penetrating in the axial direction AD. The shaft 21 is inserted into the holding hole 62h. Accordingly, the pair of support columns 62a support both ends of the shaft 21.

One support column 62a may be provided with, for example, a locking mechanism (not shown) that regulates the rotation of the shaft 21 around the center axis J. In this case, the rotor core support unit 62 includes the locking mechanism. The rotor core support unit 62 can rotate the shaft 21 around the center axis J by releasing the locking mechanism. The rotor core support unit 62 can fix the rotor core 27 while a desired position of the outer peripheral surface 27a of the rotor core 27 faces the magnet support mechanism 70. Furthermore, the locking mechanism does not necessarily need to be provided, and instead of the locking mechanism, the rotation of the rotor may be suppressed from the outside using a jig or the like and fixed at a predetermined position.

The magnet support mechanism 70 is disposed on the outside of the radial direction RD of the rotor core 27 supported by the rotor core support unit 62. The magnet support mechanism 70 supports the magnet 25m at the outside of the radial direction RD of the rotor core 27. The magnet support mechanism 70 of the rotor manufacturing apparatus 60 according to this embodiment is disposed directly above, for example, the rotor core 27. The magnet support mechanism 70 moves the magnet 25m inward in the radial direction RD to be attached to the outer peripheral surface 27a of the rotor core 27 while supporting the magnet 25m.

As shown in FIG. 2, the magnet support mechanism 70 includes, for example, a support base 75, a pair of support members 71, a pair of connecting plate portions 72, and a driving unit 80.

The support base 75 has, for example, a plate shape orthogonal to the radial direction RD. The support base 75 extends along, for example, a horizontal plane. The support base 75 includes, for example, a window portion 75w that penetrates in the thickness direction. The outer peripheral surface 27a of the rotor core 27 is disposed directly below the window portion 75w. The magnet support mechanism 70 attaches the magnet 25m to the outer peripheral surface 27a by passing the magnet through the window portion 75w.

The support member 71 is, for example, a block-shaped member. The support member 71 is made of a non-magnetic material. Examples of materials used for the support member 71 include aluminum alloy, non-magnetic stainless steel, titanium alloy, and the like, but other non-magnetic materials may also be used. The support member 71 is located on the upper side of the support base 75. The support member 71 is mounted on the driving unit 80 via a connecting plate portion 72.

The pair of support members 71 face each other in a direction orthogonal to both the radial direction RD and the axial direction AD. In the following description, the direction orthogonal to both the radial direction RD and the axial direction AD is referred to as the facing direction FD. The magnet 25m is disposed between the pair of support members 71 in the facing direction FD. In the following description, when the pair of support members 71 are distinguished from each other, one located on one side of the facing direction FD is referred to as a first support member 71A and the other located on the other side of the facing direction FD is referred to as a second support member 71B.

As shown in FIG. 3, each of the pair of support members 71 includes a support surface 71f. Each of the pair of support surfaces 71f is a flat surface. The pair of support surfaces 71f face each other in the facing direction FD. The pair of support surfaces 71f are respectively inclined in a direction moving away from each other in the facing direction FD as they go outward in the radial direction RD.

In the present specification, the angle between the pair of support surfaces 71f is defined as a support surface angle α. The pair of support surfaces 71f can be moved close to each other and away from each other in the facing direction FD by the function of a driving unit 80 to be described later. It is preferable that the support surface angle α is a constant angle regardless of the movement of the support surfaces 71f when they move close to each other and away from each other.

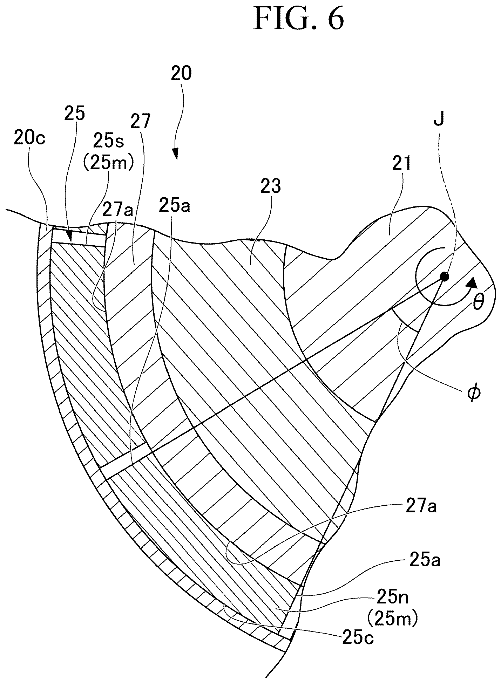

The support surface 71f of the first support member 71A contacts an end surface 25a on one side of the circumferential direction θ of the magnet 25m. On the other hand, the support surface 71f of the second support member 71B contacts the end surface 25a on one side of the circumferential direction θ of the magnet 25m. In this embodiment, the support surface angle α is approximately equal to a magnet end surface angle ϕ (see FIG. 6). Furthermore, in the present specification, the magnet end surface angle ϕ is an angle between both end surfaces 25a in the circumferential direction θ of the magnet 25m. The magnet end surface angles ϕ of all magnets 25m are approximately equal.

When the support surfaces 71f move away from each other with the magnet 25m interposed between the pair of support surfaces 71f, the end surface 25a of the magnet 25m in the circumferential direction θ slides on the support surface 71f to move downward. The magnet 25m moves while keeping the inner posture in the radial direction RD as the pair of support surfaces 71f move away from each other.

In this embodiment, it is preferable that the support surface angle α is kept within ±10° with respect to the magnet end surface angle ϕ regardless of the distance between the pair of support members 71. That is, even if the pair of support surfaces 71f are driven by the driving unit 80 to move away from each other and close to each other, the difference between the support surface angle α and the magnet end surface angle ϕ is preferably 10° or less. In this way, it is possible to keep the posture of the magnet 25m regardless of the movement of the magnet 25m in the radial direction RD since the support surface angle α is approximately equal to the magnet end surface angle ϕ even if the support members 71 move close to each other and away from each other by the driving unit 80.

As shown in FIG. 2, the distance between the support surfaces 71f at one end in the axial direction AD is defined as a first distance d1. On the other hand, the distance between the support surfaces 71f at the other end in the axial direction AD is defined as a second distance d2. Since the distance between the pair of support surfaces 71f increases as it goes upward, both the first distance d1 and the second distance d2 are the distances between the pair of support surfaces 71f at the lower ends.

In this embodiment, an absolute value (|d1-d2|) of the difference between the first distance d1 and the second distance d2 is preferably kept at 10 µm or less and more preferably 5 µm or less regardless of the distance between the pair of support members 71. That is, even if the pair of support surfaces 71f are driven by the driving unit 80 to move away from each other and close to each other, the difference between the first distance d1 and the second distance d2 is ±10 µm or less and more preferably ±5 µm or less. In this way, since the absolute value of the difference between the first distance d1 and the second distance d2 is 10 µm or less and more preferably 5 µm or less even if the support members 71 are driven by the driving unit 80 to move close to each other and away from each other, it is possible to support the magnet 25m by the magnet support mechanism 70 without wobbling regardless of the movement of the magnet 25m in the radial direction RD.

The surface of the support surface 71f is preferably subjected to, for example, a surface treatment to reduce frictional resistance. As the surface treatment, for example, a treatment to form a surface film can be performed. Further, a film that reduces friction between the support surface 71f and the end surface 25a of the magnet 25m may be attached to the surface of the support surface 71f. Accordingly, it is possible to suppress damage to the magnet 25m when the magnet 25m slides on the support surface 71f.

The pair of support members 71 may be provided with, for example, slits extending upward from the lower end of the support surface 71f. In this case, it is preferable that the positions of the slits of the pair of support members 71 are shifted in the axial direction AD and the pair of support members 71 intersect so that they are inserted into their slits when moving close to each other. In this case, the magnet support mechanism 70 can further separate the magnet 25m from the rotor core 27 by intersecting the support members 71. Accordingly, since the work of arranging the magnet 25m between the pair of support surfaces 71f can be performed in a place where the attractive force between the magnet 25m and the rotor core 27 does not reach, the preliminary work becomes easy.

As shown in FIG. 2, the pair of connecting plate portions 72 have, for example, a plate shape along a horizontal plane. The pair of connecting plate portions 72 extend in parallel in the axial direction AD. In the following description, when the pair of connecting plate portions 72 are distinguished from each other, one located on one side in the facing direction FD is referred to as a first connecting plate portion 72A and the other located on the other side in the facing direction FD is referred to as a second connecting plate portion 72B. The first support member 71A is mounted and fixed onto the first connecting plate portion 72A. On the other hand, the second support member 71B is mounted and fixed onto the second connecting plate portion 72B. Further, the first connecting plate portion 72A and the second connecting plate portion 72B are respectively mounted and fixed onto the driving unit 80.

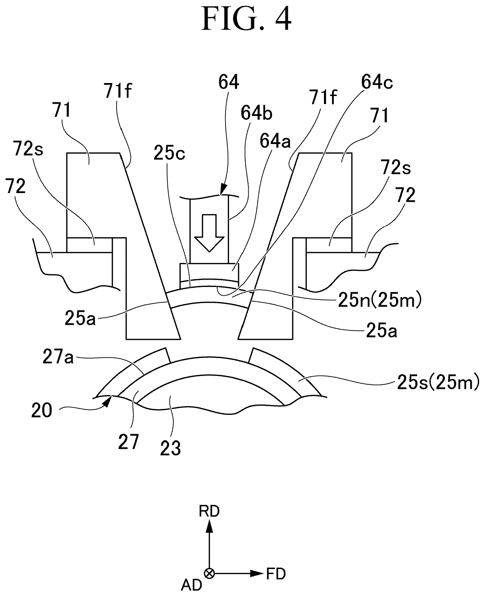

Furthermore, as will be described later with reference to FIG. 4, each of the pair of connecting plate portions 72 includes a spacer (adjuster) 72s which is attachable and detachable. When the plate-shaped spacer 72s is disposed between the connecting plate portion 72 and the support member 71, the height of the support member 71 can be adjusted. Furthermore, the spacer 72s is an example of an adjuster that adjusts the height, and other configurations may be adopted.

As shown in FIG. 2, the driving unit 80 includes, for example, a slide mechanism 85 and a screw drive mechanism 81. The driving unit 80 allows the pair of support members 71 to move close to each other and away from each other in the facing direction FD.

The slide mechanism 85 and the screw drive mechanism 81 are mounted and fixed onto the support base 75. The slide mechanism 85 is located on one axial side (+AD) of the window portion 75w and extends in the facing direction FD. On the other hand, the screw drive mechanism 81 is located on the other axial side (-AD) of the window portion 75w and extends in the facing direction FD.

The screw drive mechanism 81 includes, for example, a rotating shaft 82, a pair of bearing portions 83, and a pair of nut portions 84. The rotating shaft 82 extends in the facing direction FD. The outer periphery of the rotating shaft 82 is provided with, for example, a first male threaded portion 82a and a second male threaded portion 82b. The first male threaded portion 82a and the second male threaded portion 82b are arranged side by side in the longitudinal direction of the rotating shaft 82. The first male threaded portion 82a and the second male threaded portion 82b are oppositely threaded to each other. That is, one of the first male threaded portion 82a and the second male threaded portion 82b is a right-handed thread, and the other is a left-handed thread.

For example, an actuator (not shown) is connected to one end of the rotating shaft 82. The rotating shaft 82 is rotated by the actuator. Furthermore, for example, a handle may be provided at one end of the rotating shaft 82 instead of the actuator. In this case, a worker who assembles the magnet 25m rotates the rotating shaft 82 using the handle.

The pair of bearing portions 83 are arranged side by side in the facing direction FD. The pair of bearing portions 83 rotatably support the rotating shaft 82. Further, the rotating shaft 82 is restricted from moving in the axial direction with respect to the pair of bearing portions 83. The first male threaded portion 82a and the second male threaded portion 82b of the rotating shaft 82 are arranged between the pair of bearing portions 83.

The nut portion 84 has, for example, a block shape. The nut portion 84 is provided with a screw hole penetrating in the facing direction FD. Further, a female threaded portion is formed on the inner peripheral surface of the screw hole. The female threaded portions of the pair of nut portions 84 are oppositely threaded to each other. The first male threaded portion 82a is inserted into one of the pair of nut portions 84 and the second male threaded portion 82b is inserted into the other thereof. For example, a trapezoidal thread can be used as the first male threaded portion 82a, the second male threaded portion 82b, and the pair of nut portions 84. One of the pair of nut portions 84 located on one side in the facing direction FD is fixed to the end on the other axial side (-AD) of the first connecting plate portion 72A. The other of the pair of nut portions 84 located on the other side in the facing direction FD is fixed to the end on the other axial side (-AD) of the second connecting plate portion 72B.

The slide mechanism 85 includes, for example, a rail portion 85a and a pair of block portions 85b. The rail portion 85a extends in the facing direction FD. The pair of block portions 85b are assembled to the rail portion 85a while they are arranged side by side in the facing direction FD. The pair of block portions 85b are respectively independently slidable on the rail portions 85a in the facing direction FD. The block portion 85b located on one side of the facing direction FD in the pair of block portions 85b is fixed to the end on one axial side (+AD) of the first connecting plate portion 72A. The block portion 85b located on the other side of the facing direction FD in the pair of block portions 85b is fixed to the end on one axial side (+AD) of the second connecting plate portion 72B.

According to this embodiment, the rotating shaft 82 is rotated by the actuator so that the nut portion 84 moves in the facing direction FD. Since the female threaded portions provided in the pair of nut portions 84 are oppositely threaded to each other, the pair of nut portions 84 always move in opposite directions at the same speed in the facing direction FD. One nut portion 84 and one block portion 85b are connected to each other through the first connecting plate portion 72A. Further, the other nut portion 84 and the other block portion 85b are connected to each other through the second connecting plate portion 72B. Thus, the first connecting plate portion 72A and the second connecting plate portion 72B always move in opposite directions at the same speed in the facing direction FD. Further, the first support member 71A mounted on the first connecting plate portion 72A and the second support member 71B mounted on the second connecting plate portion 72B always move in opposite directions at the same speed in the facing direction FD. That is, the driving unit 80 of the rotor manufacturing apparatus 60 according to this embodiment moves the pair of support members 71 in opposite directions at the same speed in the facing direction FD.

Each of the pair of support members 71 moves in parallel in the facing direction FD. Therefore, the support surfaces 71f of the pair of support members 71 can be moved close to each other and away from each other while keeping the support surface angle α (see FIG. 3). Since the pair of support surfaces 71f move close to each other and away from each other, the gap between the pair of support surfaces 71f is narrowed or widened. Accordingly, the magnet 25m sandwiched between the pair of support surfaces 71f can move in the radial direction of the center axis J.

As shown in FIG. 3, the pressure mechanism 64 applies a pressure directed inward in the radial direction RD of the center axis J to an outer surface 25c of the magnet 25m supported by the magnet support mechanism 70. Accordingly, the pressure mechanism 64 presses the magnet 25m against the pair of support surfaces 71f. The pressure mechanism 64 includes, for example, a pressure portion 64a, a spring portion 64b, and an elevating portion (not shown).

The pressure portion 64a includes, for example, a contact surface 64c which is curved along the outer surface 25c of the magnet 25m. For example, a member having a high elastic modulus such as rubber or elastomer resin may be attached to the contact surface 64c. Accordingly, it is possible to suppress a large force from being locally applied to the outer surface of the magnet 25m from the pressure mechanism 64 and to suppress the damage of the magnet 25m.

The spring portion 64b applies a force directed toward the outer surface 25c of the magnet 25m to the pressure portion 64a. The elevating portion (not shown) vertically elevates the pressure portion 64a and the spring portion 64b. The elevating portion can also be driven in conjunction with the screw drive mechanism 81 of the magnet support mechanism 70. That is, the elevating portion can always apply a constant pressure to the outer surface 25c of the magnet 25m by elevating the pressure portion 64a and the spring portion 64b in accordance with the height of the magnet 25m elevated as the pair of support surfaces 71f move close to each other and away from each other. Accordingly, it is possible to apply a constant frictional force between the circumferential end surface 25a of the magnet 25m and the support surface 71f of the magnet support mechanism 70 and to smoothly move the magnet 25m inward in the radial direction RD in accordance with the operation of the pair of support members 71.

As shown in FIG. 2, the pair of contact plates 63 are mounted and fixed onto, for example, the support base 75. The pair of contact plates 63 face each other in the axial direction AD with the window portion 75w interposed therebetween. As shown in FIG. 1, the pair of contact plates 63 are located on both sides of the axial direction AD of the magnet 25m supported by the magnet support mechanism 70. The pair of contact plates 63 are made of, for example, a resin material or a non-magnetic metal material.

As shown in FIG. 1, the pair of contact plates 63 include contact surfaces 63f. Further, the pair of contact plates 63 may include guide surfaces 63a in addition to the contact surfaces 63f. The contact surface 63f is orthogonal to the axial direction AD. The contact surface 63f extends in the up to down direction (that is, the radial direction RD). The pair of contact surfaces 63f face each other in the axial direction AD. The distance between the pair of contact surfaces 63f is approximately the same as or slightly larger than the dimension of the magnet 25m in the axial direction AD. According to this embodiment, since the magnet 25m is disposed between the pair of contact surfaces 63f, the magnet 25m is positioned in the axial direction AD. Accordingly, the magnet 25m can be positioned and attached to the rotor core 27 in the axial direction AD.

The pair of guide surfaces 63a which are located above the contact surface 63f and are connected to the contact surface 63f move away from each other as it goes upward. In the method of manufacturing the rotor 20 of this embodiment, when the magnet 25m is moved from above to below the pair of contact plates 63, the axial end surface of the magnet 25m is brought into contact with the guide surface 63a and the magnet 25m is moved in the axial direction AD to smoothly guide the magnet 25m between the pair of contact surfaces 63f.

FIG. 4 is a schematic view when the rotor manufacturing apparatus 60 is viewed from the axial direction as in FIG. 3. Further, FIGS. 3 and 4 are diagrams showing a procedure of the method of manufacturing the rotor 20. Here, an example of a magnet attachment step of attaching the magnet 25m to the outer peripheral surface 27a of the rotor core 27 in each of the steps of the method of manufacturing the rotor 20 will be described.

In the following description, when distinguishing between those whose magnetization directions are on opposite sides of the radial direction RD among the plurality of magnets 25m provided in the rotor 20, these are referred to as a first magnet 25s and a second magnet 25n, respectively. Here, the first magnet 25s is a magnet that forms an S pole on the outside in the radial direction RD, and the second magnet 25n is a magnet that forms an N pole on the outside in the radial direction RD. Further, when the first magnet 25s and the second magnet 25n are not distinguished from each other, these are simply referred to as the magnet 25m.

In the manufacturing method of this embodiment, for example, the step of attaching the magnet 25m to the rotor 20 is performed in two stages. In the former step, the plurality of first magnets 25s are respectively attached to the rotor core 27. Further, in the latter step, the plurality of second magnets 25n are attached to the rotor core 27. In the following description, a procedure of attaching the plurality of first magnets 25s to the rotor core 27 is referred to as a first procedure and a procedure of attaching the plurality of second magnets 25n thereto is referred to as a second procedure. Furthermore, the order in which the first procedure and the second procedure are performed may be reversed to that in this embodiment. Furthermore, the number of magnets 25m is not limited to this embodiment and is appropriately selected according to the magnetic design of the rotating electric machine 1. Therefore, in the method of manufacturing the rotor 20, the number of magnet attachment steps to be performed and the like are appropriately set depending on the number of selected magnets 25m.

FIG. 3 shows the first procedure. When performing the magnet attachment step, adhesive is applied to the outer peripheral surface 27a of the rotor core 27, the inner peripheral surface of the magnet 25m, or both peripheral surfaces. Further, as shown in FIG. 1, in the magnet attachment step, the rotor core 27 is fixed by being supported by the rotor core support unit 62. Accordingly, the rotor core 27 is restricted from moving in the axial direction AD and the circumferential direction θ.

As shown in FIG. 3, in the magnet attachment step, the magnet 25m is first disposed between the pair of support surfaces 71f. Further, the circumferential end surface 25a of the magnet 25m is brought into contact with each of the pair of support surfaces 71f. Accordingly, the pair of support surfaces 71f support the magnet 25m.

Next, the pair of support surfaces 71f are moved away from each other in the facing direction FD so that the magnet 25m moves inward in the radial direction RD. The magnet support mechanism 70 further widens the gap between the pair of support members 71 while the magnet 25m is brought into contact with the outer peripheral surface 27a of the rotor core 27. Accordingly, the pair of support surfaces 71f are moved away from the magnet 25m to release the support of the magnet 25m. An attractive force acts between the magnet 25m and the rotor core 27. Therefore, a surface pressure acts between the inner surface of the magnet 25m and the outer peripheral surface 27a of the rotor core 27 and the magnet 25m is adhered to the outer peripheral surface 27a of the rotor core 27 without any gap.

In the first procedure, the plurality of first magnets 25s are attached to the outer peripheral surface 27a of the rotor core 27 by repeating the step of attaching the first magnet 25s by the number of the first magnets 25s. Further, the rotor core 27 is rotated around the center axis J after one first magnet 25s is attached. Accordingly, the plurality of first magnets 25s can be arranged side by side in the circumferential direction on the outer peripheral surface 27a of the rotor core 27. When rotating the rotor core 27, for example, the locking mechanism that locks the rotation of the rotor core by the rotor core support unit 62 shown in FIG. 1 is released and the rotor core 27 is rotated by a predetermined angle to operate the locking mechanism again.

FIG. 4 shows the second procedure. As shown in FIG. 4, in the magnet attachment step of the second procedure, the second magnet 25n is disposed between the first magnets 25s arranged side by side with a gap interposed therebetween in the circumferential direction θ. In the second procedure, when the distance between the support member 71 and the outer peripheral surface 27a of the rotor core 27 is too close, there is concern that the support member 71 may contact the first magnet 25s.

Therefore, the support member 71 is moved away from the outer peripheral surface 27a of the rotor core 27 with the spacer 72s interposed between the support member 71 and the connecting plate portion 72 before performing the second procedure. That is, the method of manufacturing the rotor 20 of this embodiment includes a position adjustment step performed between the first procedure and the second procedure. The position adjustment step is a step of changing the radial distance of the support member 71 with respect to the center axis J.

The spacer 72s has a plate shape, for example, and has a thickness equivalent to the thickness of the magnet 25m. By interposing the spacer 72s between the support member 71 and the connecting plate portion 72, the pair of support members 71 can be moved outward in the radial direction RD. Accordingly, it is possible to suppress the support member 71 from contacting the first magnet 25s attached to the outer peripheral surface 27a of the rotor core 27.

As shown in FIG. 4, even in the magnet attachment step of the second procedure, the pair of support surfaces 71f are moved away from each other in the facing direction FD so that the magnet 25m moves inward in the radial direction RD. The magnet support mechanism 70 further widens the gap between the pair of support members 71 with the magnet 25m brought as close as possible to the outer peripheral surface 27a of the rotor core 27. Accordingly, the pair of support surfaces 71f are moved away from the magnet 25m to release the support of the magnet 25m. The magnet 25m is moved away from the support surface 71f and is attracted to the outer peripheral surface 27a of the rotor core 27.

Although not shown in the drawings, in the second procedure, the second magnet 25n is attached to the outer peripheral surface 27a of the rotor core 27 by repeating the step of attaching the second magnet 25n by the number of the second magnets 25n as in the first procedure. The adhesive may be cured whenever the magnet is pasted, may be cured after the first procedure or the second procedure, or may be cured after the first procedure and the second procedure. Accordingly, all magnets 25m are attached to the outer peripheral surface 27a of the rotor core 27. Further, after this, a cover is attached to the outer surface 25c of the magnet 25m and the process of manufacturing the rotor 20 is completed.

Hereinafter, the configuration and effect of the rotor manufacturing apparatus 60 and the method of manufacturing the rotor 20 of this embodiment will be summarized.

The rotor manufacturing apparatus 60 of this embodiment is the rotor manufacturing apparatus 60 that attaches the magnet 25m to the outer peripheral surface 27a of the rotor core 27 extending in the axial direction about the center axis J. The rotor manufacturing apparatus 60 includes the rotor core support unit 62 and the magnet support mechanism 70. The rotor core support unit 62 supports the rotor core 27. The magnet support mechanism 70 supports the magnet 25m on the outside of the radial direction RD of the rotor core 27. The magnet support mechanism 70 includes the pair of support members 71 and the driving unit 80. The pair of support members 71 face each other in the facing direction FD orthogonal to both the radial direction RD and the axial direction AD. The magnet 25m is disposed between the pair of support members 71. The driving unit 80 moves the pair of support members 71 close to each other and away from each other in the facing direction FD. Each of the pair of support members 71 includes the support surface 71f. The pair of support surfaces 71f face each other in the facing direction FD. The pair of support surfaces 71f contact the end surface 25a of the magnet 25m in the circumferential direction θ. The pair of support surfaces 71f are respectively inclined in a direction moving away from each other in the facing direction FD as they go outward in the radial direction RD.

According to this configuration, the magnet 25m can be moved inward in the radial direction RD by moving the pair of support members 71 away from each other using the driving unit 80 with the magnet 25m disposed between the pair of support members 71. Thus, even if a large attractive force or repulsive force is applied to the inside of the magnet 25m in the radial direction RD due to the magnetic force of the magnet 25m, the magnet 25m can be moved close to the outer peripheral surface 27a of the rotor core 27 while keeping the posture of the magnet 25m. As a result, the magnet 25m can be attached to the outer peripheral surface 27a of the rotor core 27 with good positional accuracy of the magnet 25m by suppressing the impact.

Furthermore, in the rotor 20 manufactured by the manufacturing method of this embodiment, a samarium cobalt (SmCo) magnet is used as the magnet 25m. The samarium cobalt magnet has superior heat resistance compared to other common rare earth magnets such as neodymium magnets and is known to maintain high magnetic properties even at high temperatures of 150°C or higher. When the rotating electric machine 1 is mounted on a moving object such as an aircraft 90, there is a progress of a decrease in size and weight. Therefore, it is difficult to adopt a complicated or large cooling structure and heat dissipation structure for the rotating electric machine 1. According to this embodiment, it is possible to configure the rotating electric machine 1 that exhibits sufficient torque performance even if the magnet 25m becomes high temperature by adopting the samarium cobalt magnet as the magnet 25m. As a result, the cooling structure and heat dissipation structure of the rotating electrical machine 1 can be simplified. However, on the other hand, the samarium cobalt magnet is prone to breakage when subjected to impact. Additionally, it is difficult to magnetize samarium cobalt magnet by post-magnetization, such as magnetizing the magnet after assembled into the rotor core. Therefore, when the samarium cobalt magnet is used as the magnet 25m of the rotor 20, it is necessary to attach the magnetized magnet 25m to the outer peripheral surface of the rotor core without applying impact while maintaining high dimensional accuracy. According to the rotor manufacturing apparatus 60 of this embodiment, the magnet 25m can be attached to the rotor core 27 without damaging the magnet 25m which is made of the samarium cobalt magnet and is easily damaged by such impact.

In this embodiment, an angle between both end surfaces 25a of the magnet 25m in the circumferential direction θ is defined as the magnet end surface angle ϕ. Further, an angle between the pair of support surfaces 71f is defined as the support surface angle α. It is preferable that the support surface angle α is kept within ±10° with respect to the magnet end surface angle ϕ regardless of the distance between the pair of support members 71.

According to this configuration, it is possible to suppress the occurrence of wobbling in the magnet 25m by stabilizing the contact between the support surface 71f and the end surface 25a of the magnet 25m when the magnet 25m is moved in the radial direction RD. Accordingly, the magnet 25m can be smoothly attached to the outer peripheral surface 27a of the rotor core 27.

In this embodiment, an absolute value (|d1-d2|) of the difference between the distance (first distance d1) between the support surfaces 71f at one end in the axial direction AD and the distance (second distance d2) therebetween at the other end in the axial direction AD is kept at 10 µm or less and preferably 5 µm or less regardless of the distance between the pair of support members 71.

According to this configuration, a gap between the end surface 25a of the magnet 25m and the end on one axial side or the other axial side of the support surface 71f can be sufficiently small to be about 10 µm (more preferably, about 5 µm) when the magnet 25m is moved in the radial direction RD. Accordingly, it is possible to suppress the occurrence of wobbling in the magnet 25m when moving the magnet 25m and to smoothly attach the magnet 25m to the outer peripheral surface 27a of the rotor core 27.

The rotor manufacturing apparatus 60 of this embodiment can include the pair of contact plates 63. The pair of contact plates 63 are located on both sides of the axial direction AD of the magnet 25m supported by the magnet support mechanism 70. Each of the pair of contact plates 63 includes the contact surface 63f. The pair of contact surfaces 63f face each other. The pair of contact surfaces 63f are orthogonal to the axial direction AD.

According to this configuration, it is possible to position the magnet 25m between the contact surfaces 63f in the axial direction AD by appropriately setting the distance between the contact surfaces 63f. Accordingly, it is possible to attach the magnet 25m to the rotor core 27 while positioning the magnet in the axial direction AD.

In the rotor manufacturing apparatus 60 of this embodiment, the magnet support mechanism 70 can include the spacer (adjuster) 72s which changes the distance between the pair of support members 71 in the radial direction RD with respect to the center axis J.

When the magnet 25m is attached to the outer peripheral surface 27a of the rotor core 27, it is preferable to attach all magnets of one pole (for example, the first magnets 25s) of an N pole and an S pole and then attach all magnets of the other pole (for example, the second magnet 25n) in order to suppress the repulsion between the magnets 25m. According to the above-described configuration, since the rotor manufacturing apparatus 60 includes the spacer 72s, the support member 71 can move close to the outer peripheral surface 27a of the rotor core 27 when attaching the magnet of one pole. Further, when attaching the magnet of the other pole, the magnet can be disposed between the already attached magnets 25m of one pole while avoiding the contact with the magnet 25m at a certain distance or more from the outer peripheral surface 27a of the rotor core 27.

The rotor manufacturing apparatus 60 of this embodiment can include the pressure mechanism 64. The pressure mechanism 64 presses the magnet 25m supported by the magnet support mechanism 70 against the pair of support surfaces 71f.

According to this configuration, it is possible to suppress the end surface 25a of the magnet 25m in the circumferential direction θ from rising from the support surface 71f. Accordingly, it is possible to apply a constant frictional force between the circumferential end surface 25a of the magnet 25m and the support surface 71f of the magnet support mechanism 70 and to smoothly move the magnet 25m inward in the radial direction RD in accordance with the operation of the pair of support members 71.

In the rotor manufacturing apparatus 60 of this embodiment, the driving unit 80 can move the pair of support members 71 in opposite directions at the same speed in the facing direction FD.

According to this configuration, the magnet 25m can move close to the outer peripheral surface 27a of the rotor core 27 without any movement in the circumferential direction θ. Therefore, when the magnet 25m moves close to the rotor core 27, the posture of the magnet 25m is easily kept at a constant posture and the magnet 25m can be smoothly attached to the outer peripheral surface 27a of the rotor core 27.

The method of manufacturing the rotor 20 of this embodiment is a manufacturing method of attaching the magnet 25m to the outer peripheral surface 27a of the rotor core 27 extending in the axial direction AD about the center axis J. In this embodiment, a direction orthogonal to both the radial direction RD and the axial direction AD of the center axis J is referred to as the facing direction FD. The method of manufacturing the rotor 20 is performed using the magnet support mechanism 70. The magnet support mechanism 70 includes the pair of support surfaces 71f. The pair of support surfaces 71f are respectively inclined in a direction moving away from each other in the facing direction FD as they go outward in the radial direction RD. The method of manufacturing the rotor 20 brings the end surfaces 25a of the magnet 25m in the circumferential direction θ into contact with the pair of support surfaces 71f to support the magnet 25m. Further, the method of manufacturing the rotor 20 moves the pair of support surfaces 71f away from each other in the facing direction FD to move the magnet 25m inward in the radial direction RD to be attached to the outer peripheral surface 27a of the rotor core 27.

According to this configuration, even if a large attractive force or repulsive force directed toward the rotor core 27 is applied to the magnet 25m due to the magnetic force of the magnet 25m, the magnet 25m can be moved close to the outer peripheral surface 27a of the rotor core 27 while keeping the posture of the magnet 25m. As a result, the magnet 25m can be attached to the outer peripheral surface 27a of the rotor core 27 with good positional accuracy of the magnet 25m by suppressing the impact.

According to at least one of the above-described embodiments, it is possible to provide the rotor manufacturing apparatus and the rotor manufacturing method capable of smoothly disposing the rotor magnet on the outer peripheral surface of the rotor core.

The rotor 20 manufactured by the manufacturing method according to this embodiment and the rotating electric machine 1 including the rotor 20 will be described.

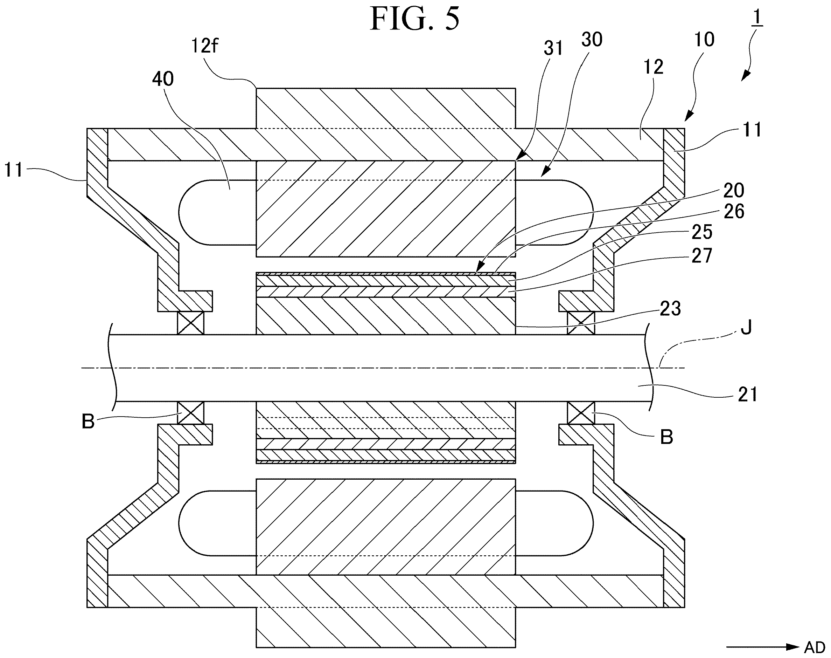

FIG. 5 is a cross-sectional view taken along the center axis J of the rotating electric machine 1. FIG. 6 is a cross-sectional view of the rotor 20.

As shown in FIG. 5, the rotating electric machine 1 includes, for example, an annular stator 30 centered on the center axis J, the rotor 20 located on the inside of the stator 30 in the radial direction RD, and a tubular housing 10 accommodating the stator 30 and the rotor 20. The rotating electric machine 1 of FIG. 5 is an inner rotor type rotating electric machine in which the rotor 20 is located on the inside of the stator 30 in the radial direction RD.

The housing 10 includes, for example, a housing body 12 which extends in the axial direction AD and surrounds the stator 30 from the outside of the radial direction RD, a bearing holder 11 which is fixed to each of the ends of the housing body 12 on one axial side (+AD) and the other axial side (-AD), and heat radiation fins 12f.

The bearing holder 11 has, for example, a disc shape centered on the center axis J. The pair of the bearing holders 11 respectively cover both axial openings of the housing body 12. For example, the bearing holder 11 is fixed to an end surface facing the axial direction AD of the housing body 12 by using a bolt (not shown). The housing body 12 holds a bearing B at the center portion. The bearing B rotatably supports the shaft 21 of the rotor 20.

As shown in FIG. 5, the stator 30 surrounds the rotor 20 from the outside in the radial direction RD. The stator 30 includes a stator core 31 and a coil 40.

The rotor 20 is supported by the housing 10 to be rotatable around the center axis J. The rotor 20 includes the shaft 21 having the center axis J, the hub member 23, the rotor core 27, a magnet unit 25, and a cover 26.

The shaft 21 has, for example, a columnar shape extending in the axial direction AD about the center axis J. The hub member 23 has, for example, a cylindrical shape with a sufficient thickness in the radial direction RD. The hub member 23 may be provided with a plurality of through-holes penetrating in the axial direction AD. The hub member 23 is fixed to, for example, the outer peripheral surface of the shaft 21. Further, for example, the rotor core 27 is fixed to the outer peripheral surface of the hub member 23.

The rotor core 27 is made of a magnetic material. The rotor core 27 is, for example, a laminated steel plate formed by laminating a plurality of electromagnetic steel plates in the axial direction AD. The rotor core 27 extends in the axial direction AD about the center axis J. The rotor core 27 of FIG. 6 has, for example, a cylindrical shape. The magnet unit 25 is disposed on the outer peripheral surface 27a of the rotor core 27.

The magnet unit 25 has, for example, an annular shape. The magnet unit 25 can be fixed to, for example, the outer peripheral surface of the rotor core 27 by bonding means such as adhesive. The rotor 20 of FIG. 6 is of an SPM type in which the magnet unit 25 magnetically directly faces the stator 30.

The magnet unit 25 includes the plurality of first magnets 25s and the plurality of second magnets 25n. The first magnet 25s and the second magnet 25n are alternately arranged in the circumferential direction θ. That is, the magnet unit 25 includes the plurality of magnets 25m of which magnetization directions are alternated in the circumferential direction θ.

As shown in FIG. 6, the magnet 25m extends, for example, in an arc shape centered on the center axis J when viewed from the axial direction AD. Further, the magnet 25m has a plate shape with the radial direction RD as the thickness direction. The inner surface of the magnet 25m facing the inside of the radial direction RD is adhered and fixed to the outer surface of the rotor core 27. Further, the outer surface 25c facing the outside of the magnet 25m in the radial direction RD is covered with, for example, the tubular cover 26. The cover 26 surrounds the magnet unit 25 and suppresses the plurality of magnets 25m from coming off from the rotor core 27. The cover 26 is made of a material that does not easily affect the magnetic force of the magnet unit 25.

The magnet 25m includes the pair of end surfaces 25a facing one side and the other side in the circumferential direction θ. Each end surface 25a is, for example, a flat surface extending in the radial direction. In the present specification, an angle between both end surfaces 25a of the magnet 25m in the circumferential direction θ is defined as the magnet end surface angle ϕ. The magnet end surface angles ϕ of all magnets 25m including the first magnet 25s and the second magnet 25n are substantially equal.

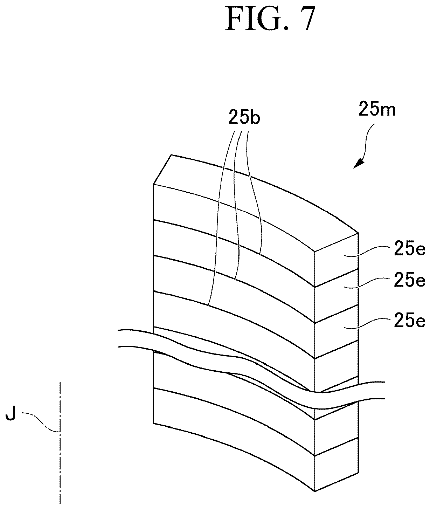

FIG. 7 is a perspective view of the magnet 25m as an example. The magnet 25m may be divided. Here, the divided magnet will be described as an example. The magnet 25m includes a plurality of element magnets 25e laminated in the axial direction AD. The plurality of element magnets 25e are, for example, sintered magnets. The element magnets 25e arranged in the axial direction AD are bonded to each other via an adhesive layer 25b. The magnetization directions of the plurality of laminated element magnets 25e are in the radial direction RD and coincide with each other. The plurality of element magnets 25e shown in FIG. 7 are, for example, magnetized after being bonded to each other via the adhesive layer 25b.

According to the magnet 25m shown in FIG. 7, the magnet is formed by bonding the plurality of element magnets 25e. Therefore, the value of the eddy current flowing through each element magnet 25e can be reduced and the eddy current loss occurring in the magnet 25m as a whole can be reduced compared to the case where the magnet is composed of one sintered magnet. Accordingly, heat generation in the magnet 25m due to eddy currents generated in the magnet 25m can be suppressed, a decrease in the magnetic force of the magnet 25m can be reduced, and the torque performance of the rotating electric machine 1 can be improved.

In the example shown in FIG. 7, it is preferable that the adhesive layer 25b that bonds the element magnets 25e is made of an insulating material. In this case, it is possible to suppress the current flow between the element magnets 25e to be bonded to each other and to effectively suppress the eddy current loss of the magnets 25m. For example, the element magnets 25e may be insulated from each other by forming an insulating film on the surface of the element magnets 25e.

In the example shown in FIG. 7, the element magnet 25e is composed of a samarium cobalt magnet. That is, the magnet 25m of FIG. 7 is a samarium cobalt magnet. The samarium cobalt magnet has superior heat resistance compared to other common rare earth magnets such as neodymium magnets and is known to maintain high magnetic properties even at high temperatures of 150°C or higher, where the magnetic force of neodymium magnets is significantly reduced. Accordingly, it is possible to configure the rotating electric machine 1 that exhibits sufficient torque performance even if the magnet 25m becomes high temperature by adopting the samarium cobalt magnet as the magnet 25m.

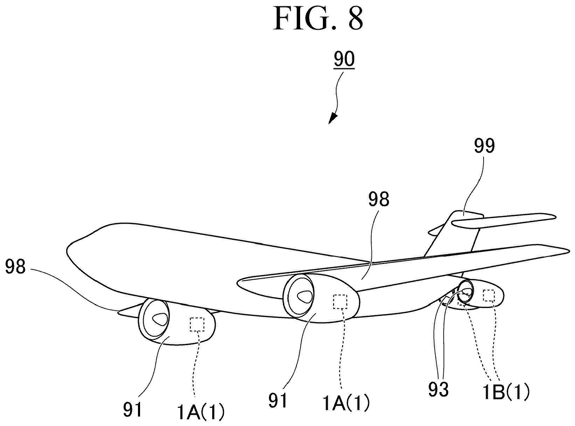

The above-described rotating electric machine can be mounted on various driving objects such as automobiles, railways, and aircraft. FIG. 8 is a schematic view of the aircraft 90 as an example of a driving object on which the rotating electric machine 1 is mounted. The aircraft 90 is a hybrid aircraft that is propelled by a combination of the jet engine 91 and the rotating electric machine 1. The aircraft 90 includes the pair of jet engines 91 and four rotating electric machines 1. The jet engine 91 is provided in a main wing 98. The jet engine 91 generates thrust by exhausting the air backward.

Four rotating electric machines 1 are classified into two power generating rotating electric machines 1A and two driving rotating electric machines 1B. Each power generating rotating electric machine 1A is connected to a main shaft of the jet engine 91. The power generating rotating electric machine 1A generates power by the jet engine 91. On the other hand, the driving rotating electric machine 1B is disposed below a vertical tail 99. The driving rotating electric machine 1B sends air backward and generates thrust by rotating the propulsion fan 93. The driving rotating electric machine 1B is driven by the power generated by the power generating rotating electric machine 1A. Furthermore, when the power generating rotating electric machine 1A generates surplus power, this power may be charged into a battery and used when necessary.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A rotor manufacturing apparatus for attaching a magnet to an outer peripheral surface of a rotor core extending in an axial direction about a center axis, the rotor manufacturing apparatus comprising:
a rotor core support unit which supports the rotor core; and
a magnet support mechanism which supports the magnet on the outside of the rotor core in a radial direction,
wherein the magnet support mechanism comprises:
a pair of support members that face each other in a facing direction orthogonal to both the radial direction and the axial direction, and the pair of support members being configured to let the magnet disposed between the pair of support members; and
a driving unit being configured to move the pair of support members
close to each other and away from each other in the facing direction,
wherein the pair of support members has a pair of support surfaces, respectively, which face each other in the facing direction, the pair of support surfaces configured to contact with circumferential end surfaces of the magnet, and
wherein the pair of support surfaces are respectively inclined away from each other in the facing direction outwardly in the radial direction.

2. The rotor manufacturing apparatus according to claim 1,
wherein an angle between both end surfaces of the magnet in the circumferential direction is defined as a magnet end surface angle,
wherein an angle between the pair of support surfaces is defined as a support surface angle, and
wherein the support surface angle is kept within ±10° or less with respect to the magnet end surface angle, regardless of a distance between the pair of support members.

3. The rotor manufacturing apparatus according to claim 1,
wherein an absolute value of a difference between a distance between the support surfaces at one end in the axial direction and a distance between the support surfaces at the other end in the axial direction is kept at 10 µm or less, regardless of a distance between the pair of support members.

4. The rotor manufacturing apparatus according to claim 1, further comprising:
a pair of contact plates which are located on both sides of the magnet supported by the magnet support mechanism in the axial direction,
wherein the pair of contact plates respectively has a pair of contact surfaces facing each other, the pair of contact surfaces being orthogonal to the axial direction.

5. The rotor manufacturing apparatus according to claim 1,
wherein the magnet support mechanism includes an adjuster which changes a distance of the pair of support members in the radial direction with respect to the center axis.

6. The rotor manufacturing apparatus according to claim 1, further comprising:
a pressure mechanism configured to press the magnet supported by the magnet support mechanism against the pair of support surfaces.

7. The rotor manufacturing apparatus according to claim 1,
wherein the driving unit configured to move the pair of support members in opposite directions at the same speed in the facing direction.

8. A rotor manufacturing method of attaching a magnet to an outer peripheral surface of a rotor core extending in an axial direction about a center axis assuming that a direction orthogonal to both radial and axial directions of the center axis is defined as a facing direction and a magnet support mechanism including a pair of support surfaces respectively inclined in a direction moving away from each other in the facing direction as they go outward in the radial direction is used, the rotor manufacturing method comprising:
bringing circumferential end surfaces of the magnet into contact with the pair of support surfaces to support the magnet; and
moving the pair of support surfaces away from each other in the facing direction to move the magnet inward in the radial direction to be attached to the outer peripheral surface of the rotor core.
